**Europäisches Patentamt**

**European Patent Office**

**Office européen des brevets**

(11) Veröffentlichungsnummer: **0 525 483 A1**

## EUROPÄISCHE PATENTANMELDUNG

(21) Anmeldenummer: **92111835.2**

(51) Int. Cl.5: **B29C 51/26**

(22) Anmeldetag: **11.07.92**

(30) Priorität: **27.07.91 DE 9109287 U**

(43) Veröffentlichungstag der Anmeldung:
**03.02.93 Patentblatt 93/05**

(84) Benannte Vertragsstaaten:
**DE DK ES FR GB IT NL PT SE**

(71) Anmelder: **VERPACO AG**
**Weidstrasse 1**
**CH-6331 Hünenberg(CH)**

(72) Erfinder: **Fabricius, Karl Heinz**
**c/o VERPACO AG, Weidstrasse 1**
**CH-6331 Hünenberg(CH)**

(74) Vertreter: **Riebling, Peter, Dr.-Ing.,**
**Patentanwalt**
**Rennerle 10, Postfach 31 60**
**W-8990 Lindau/B.(DE)**

(54) **Formwerkzeug zur Herstellung von Kunststoffbechern.**

(57) Beschrieben wird ein Formwerkzeug zur Herstellung von Kunststoffbechern, wobei mit einem Helferstempel aus einer vorgeheizten Kunststoff-Flachfolie Becher erzeugt werden und hierbei dem Helferstempel ein Ringkolben zugeordnet ist, welcher mit seiner unteren Klemm- und Dichtfläche genau definiert die Folienbahn im Umfangsbereich des Helferstempels klemmt.

FIG 1

EP 0 525 483 A1

Gegenstand der vorliegenden Erfindung ist ein Formwerkzeug zur Herstellung von Kunststoffbechern nach dem Oberbegriff des Patentanspruchs 1.

Derartige Formwerkzeuge sind als sogenannte Hohlblaswerkzeuge bekannt geworden, bei denen aus einer vorgeheizten Kunststoff-Flachfolie mit einem Formwerkzeug ein Becher erzeugt wird. Die Verwendung derartiger Hohlblaswerkzeuge hat jedoch den Nachteil, daß nur relativ niedrige Taktzahlen zu erreichen sind.

Bei derartigen Formwerkzeugen war vor allem die Einklemmung der Folienbahn nur mangelhaft gelöst worden. Es war bekannt, die Folie lediglich über O-Ring-Dichtungen zwischen dem Ober- und dem Unterwerkzeug einzuklemmen. Bei der Einklemmung nur im äußeren Umfangsbereich dieses Hohlblaswerkzeuges bestand jedoch der Nachteil, daß rund um jeden Helferstempel die Folie nicht eingeklemmt werden konnte und demzufolge bei einem Mehrfachwerkzeug nur immer der äußere Umfangsbereich (z. B. bei der Herstellung von 6 Bechern nur dieser Umfangsbereich) geklemmt werden konnte.

Damit konnte nur mit niedrigen Geschwindigkeiten der Helferstempel in das Unterwerkzeug einfahren und im Hohlblasverfahren den Becher formen, um Einrißerscheinungen der Folie im Bereich zwischen dem Ober- und dem Unterwerkzeug zu vermeiden.

Weiterer Nachteil der bekannten Hohlblaswerkzeuge war, daß wegen der relativ niedrigen Takzahl auch die Kühlung nicht besonders forciert werden mußte und daher eben insgesamt nur niedrige Taktzahlen zu erreichen waren.

Wegen der langsamen Arbeitsweise konnte daher auch nur die Formluft für das Hohlblaswerkzeug nur langsam eingeführt werden, wodurch nur relativ große Radien, insbesondere im Bodenbereich des Bechers, möglich waren. Damit bestehen jedoch aber Handhabungsnachteile bei dem später zu handhabenden Becher. Um derartige große Radien zu vermeiden war es bekannt, sogenannte Positiv-Formverfahren zu verwenden, die aber mit dem Nachteil einer noch geringeren Produktionsleistung verbunden waren.

Die Anbringung großer Radien sollte im übrigen vermeiden, daß andernfalls - bei der Anbringung kleiner Radien - der Kunststoffquerschnitt in diesem Bereich stark geschwächt wird, so daß die Dichtheit des Bechers nicht mehr gewährleistet war.

Aufgabe der vorliegenden Erfindung ist es deshalb, ein Formwerkzeug der eingangs genannten Art so weiterzubilden, daß mit wesentlich höheren Taktzahlen derartige Kunststoffbecher hergestellt werden können.

Zur Lösung der gestellten Aufgabe ist die Erfindung durch die technische Lehre des Anspruchs 1 gekennzeichnet.

Wesentliches Merkmal der vorliegenden Erfindung ist, daß nun nicht mehr die Folienbahn nur noch am Außenumfang des Formwerkzeuges über O-Ring-Dichtungen geklemmt wird, sondern daß jedem Helferstempel ein eigener Ringkolben zugeordnet ist, welcher mit seiner unteren Klemm- und Dichtfläche genau definiert die Folie im Umfangsbereich des Helferstempels für das jeweilige Gesenk klemmt und hierdurch eine außerordentlich hohe Taktgeschwindigkeit nun möglich ist.

Durch die einwandfreie Klemmung der Folie im gesamten Umfangsbereich um den Helferstempel wird also die Folie abgedichtet und geklemmt, wodurch die vorher beschriebenen Einrißerscheinungen der Folie beim Eindringen des Helferstempels in die Folie vermieden werden.

Damit ist es nun erstmals möglich, praktisch schußartig den Helferstempel nach unten in das Unterwerkzeug zu fahren und ebenfalls schußartig die Formluft in das Unterwerkzeug einzublasen, wodurch mit einem sehr kurzen Takt ein derartiger Kunststoffbecher ausgeformt wird.

Mit einem erfindungsgemäßen Formwerkzeug ist es nun erstmals möglich, Taktzahlen von 30 bis 50 Becher pro Minute pro Formstempel (Gesenk) herzustellen. Mit den bisher bekannten Formwerkzeugen waren lediglich Taktzahlen von 12 bis 14 Becher pro Gesenk herzustellen.

Wesentliches Merkmal der vorliegenden Erfindung ist im übrigen, daß der Ringkolben durch Druckluft nach unten in seine Klemm- und Dichtstellung gefahren wird und dort durch Druckluft festgehalten wird, und daß der Klemmkolben einen inneren Ringraum definiert, in den die Formluft eingeblasen wird, wodurch die Formluft nun erstmals schußartig in das Gesenk eingeblasen werden kann.

Weiterer Vorteil ist, daß durch die erfindungsgemäß vorhandenen großvolumigen Kühlkanäle nun eine schlagartige Kühlung des Ober- und Unterwerkzeuges gegeben ist, so daß auch mit diesem Merkmal die erwähnten hohen Taktzahlen erreicht werden können.

Durch das schlagartige Einschießen der Formluft in das Untergesenk kommt es demzufolge zu einer Anlage des Bechermaterials an den Helferstempel infolge des entstehenden Überdruckes im Gesenk. Dadurch schmiegt sich die Folie an den Helferstempel an und damit können nun erstmals relativ enge Radien geformt werden. Die vorher als nachteilig erwähnten großen Radien können mit dem neuerungsgemäße Formwerkzeug nun vermieden werden.

Durch diesen Überdruck wird im übrigen vermieden, daß sich die Folie an die kalte Innenwand des Untergesenks anlegt; die Folie legt sich hingegen an den mit einer besonderen Oberfläche versehenen Helferstempel an, der nicht gekühlt ist.

Damit besteht der Vorteil, daß beim schlagartigen Abwärtsfahren des Helferstempels in das Untergesenk die Folie sich an dem Außenumfang des Helferstempels anlegt und nicht an der kalten Innenwandung des Untergesenks. Die Folie bleibt also auf der gesamten Länge ihrer Formung plastisch und verformbar, weil sie sich nur am Außenumfang des Helferstempels anlegt.

Erst wenn schlagartig die Formluft in das Untergesenk eingeblasen wird löst sich die noch plastische Folie von der Oberfläche des Helferstempels und legt sich an die gekühlte Innenfläche des Untergesenks an, wodurch sie dann sofort erstarrt.

Mit dieser besonderen Produktionsweise können nun erstmals Ziehverhältnisse von 1:6,5 bis 7 erreicht werden, während beim Stand der Technik nur Ziehverhältnisse von etwa 1:4,5 bis 5 erreicht werden konnten.

Damit wird also eine optimale Folienverteilung im Untergesenk gewährleistet, und es wird gleichzeitig verhindert, daß sich die Folie vorzeitig an den gekühlten Innenflächen des Untergesenks anlegt.

Zur konstruktiven Lösung dieser Merkmale ist es erforderlich, daß relativ große Kapazitäten von Druckluft zur Verfügung gestellt werden, die aus einem entsprechenden Drucklufttank entnomen werden.

Weitere Voraussetzung ist, daß entsprechend großvolumig gekühlte Kühlflächen im Ober- und Untergesenk vorhanden sind, um eine schnelle Taktzahl überhaupt zu erreichen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere wesentliche Merkmale und Vorteile der Erfindung hervor.

Es zeigen:

Figur 1:     schematisiert gezeichnet einen Schnitt durch ein Formwerkzeug nach der Erfindung;

Figur 2:     schematisiert ein Druckluftplan für das Formwerkzeug nach Figur 1.

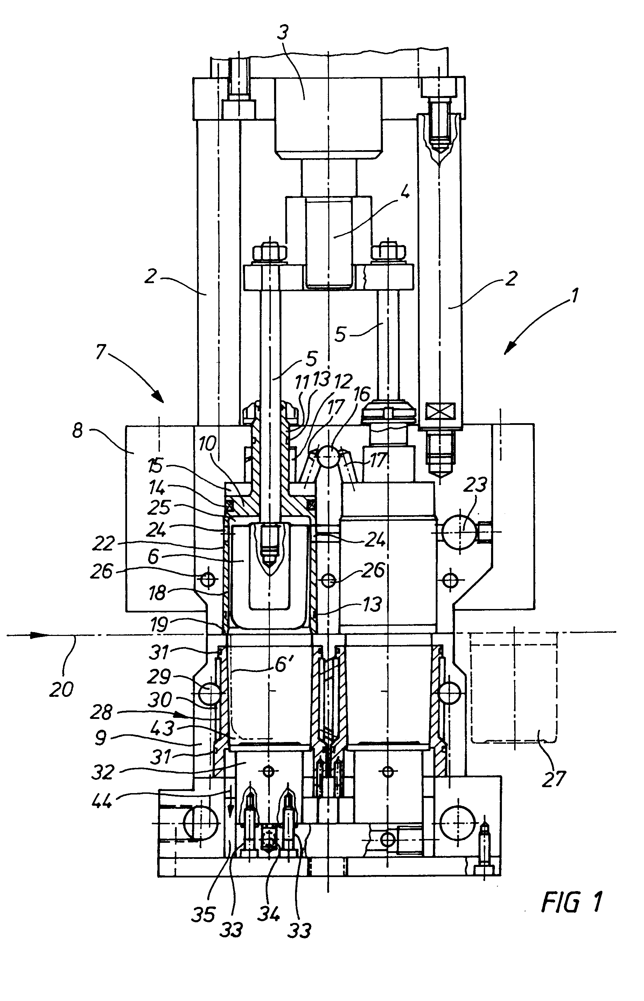

Das Formwerkzeug 1 nach Figur 1 besteht im wesentlichen aus einem Gestell 2, an dessen Oberseite ein Zylinder 3 angeordnet ist, dessen Kolbenstange 4 über ein entsprechendes Verbindungsglied mit weiteren, parallel wirkenden Kolbenstangen 5 verbunden ist. Das in Figur 1 gezeigte Formwerkzeug dient beispielsweise zur Herstellung von zwölf gleichartigen Bechern 27, die aus dem Bereich einer Folienbahn 20 ausgeformt werden, wobei die Folienbahn 20 in Pfeilrichtung 21 zwischen einem Oberwerkzeug und einem Unterwerkzeug durchläuft.

Das in Figur 1 gezeigte Formwerkzeug mit zwei gezeigten Formstationen setzt sich also in Richtung der Zeichenebene noch um sechs weitere Formwerkzeuge fort.

Nachdem die einzelnen Stationen genau gleich ausgebildet sind wird im folgenden nur eine einzige Formstation näher beschrieben.

Die Kolbenstange 5 ist mit einer entsprechenden Verschraubung mit einem Helferstempel 6 verbunden. Sie ist hierbei abdichtend durch einen Schaft 11 eines Ringkolbens 10 hindurchgeführt, wobei der Ringkolben 10 durch eine Druckfeder 12 federvorgespannt in seiner Klemm- und Dichtlage (gemäß Figur 1) gehalten wird.

Die eigentliche Halterung des Ringkolbens 10 erfolgt aber durch ein hochgespanntes Druckluftpolster im Zylinderraum 15, wie nachfolgend später noch beschrieben wird.

Das Formwerkzeug ist im wesentlichen zweiteilig ausgebildet und besteht aus einem Oberteil 8 und aus einem Unterteil 9.

Im Gehäuse 7 des Oberteils 8 ist hierbei der Zylinderraum 15 angeordnet, in dem verschiebbar der Ringkolben 10 ausgebildet ist.

Der Zylinderraum 15 ist luftschlüssig über einen Luftkanal 17 mit einem Luftanschluß 16 verbunden.

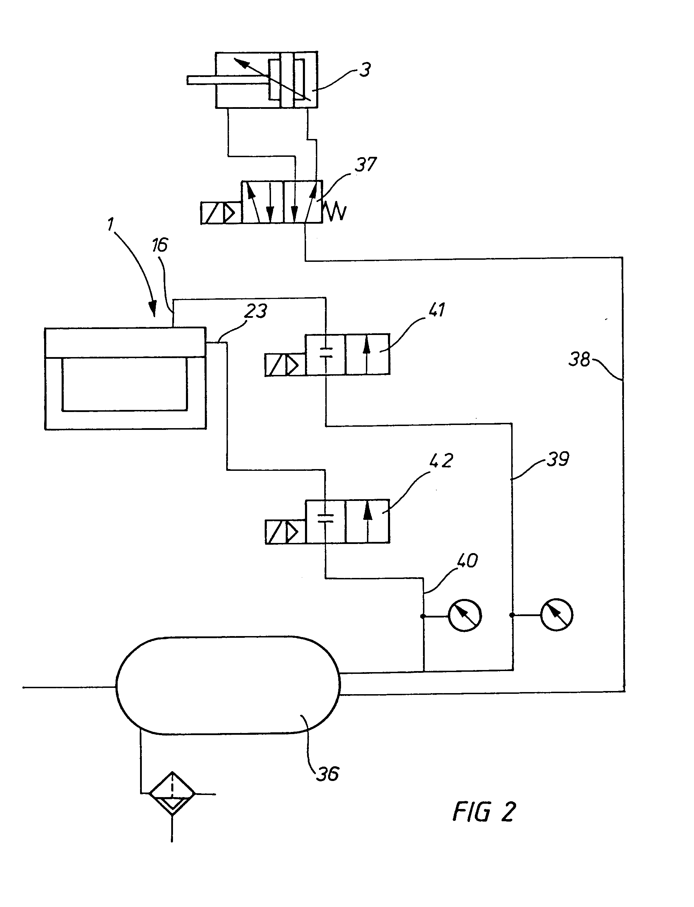

Gemäß Figur 2 wird hierbei die Druckluft über den Luftanschluß 16 in einem Drucklufttank 36 aufbewahrt und über die Leitung 39 und das Ventil 41 in den Zylinderraum 15 eingespeist.

Die Abdichtung des Ringkolbens 10 im Zylinderraum 15 erfolgt hierbei über Dichtungen 13,14.

Am Außenumfang des Ringkolbens 10 ist ein Ringraum 22 angebracht, der luftschlüssig über Querbohrungen 24 mit einer Luftzufuhr 23 verbunden ist. Die Luftzufuhr wird hierbei ebenfalls aus dem Drucklufttank 36 entnommen und über die Leitung 40 und das Ventil 42 erfolgt die Luftzufuhr in den Ringraum 22. Über diese Leitung 39 wird die Formluft für die Ausformung des Bechers in das Untergesenk 43 eingeführt.

Der Ringkolben weist im übrigen eine untere Klemm- und Dichtfläche 19 auf, mit der er in seiner Funktionsstellung auf der Oberseite der Folienbahn 20 aufsitzt.

In der gezeigten Funktionsstellung nach Figur 1 ist das Formwerkzeug in seiner oberen Stellung.

Im Unterteil 9 ist das Untergesenk 43 angeordnet, wobei das Gesenk 28 im wesentlichen aus einem hülsenförmigen Teil besteht, welches über Dichtungen 31 von einem radial außen liegenden Ringkanal 30 getrennt ist, der über einen Kühlkanal wassergekühlt ist.

Der Bodenbereich des Untergesenks 43 wird gebildet durch ein separates Bodenteil 32, welches für sich über einen Kanaleinlaß 34 und einen nicht näher dargestellten Kanalauslaß stark gekühlt wird. Das Bodenteil 32 wird hierbei mit Schrauben 33 an einer Grundplatte des Unterteils 9 befestigt.

Ein Formungsvorgang erfolgt nun folgendermaßen:

Der Helferstempel 6 wird schlagartig durch Entladung eines Teils des Drucklufttankes 36 nach unten durch Beaufschlagung des Zylinders 3 in das Untergesenk 43 eingefahren und nimmt dann die Stellung 6' gemäß Figur 1 ein. In dieser Funktionsstellung schmiegt sich die noch plastische Folienbahn an den Außenumfang des Helferstempels 6' an und legt sich nicht an die Innenwandung des Untergesenks 43 an. Dies deshalb, weil beim schlagartigen Einfahren des Helferstempels 6 im Untergesenk 43 ein Überdruck entsteht, der für das Anlegen der noch plastischen Folie am Außenumfang des Helferstempels 6 sorgt.

Damit werden die oben beschriebenen Vorteile hinsichtlich der Materialdicke und des Ziehverhältnisses erreicht.

Erst nachdem diese Anlage erreicht wird, wird schlagartig durch weitere Entleerung des Drucklufttankes 36 bei geöffnetem Ventil 42 über die Leitung 40 Druckluft zur Ausformung des Bechers über die Querbohrung 24 eingeleitet und strömt durch den Innenraum 25 nach unten und sorgt nun dafür, daß die Folie sich vom Außenumfang des Helferstempels 6 abhebt und sich am Innenumfang des Untergesenks 43 anlegt. Die von diesem Formvorgang verdrängte Luft strömt dann in Pfeilrichtung nach unten durch den Luftkanal 35 ab.

Wichtig hierbei ist, daß vorher, vor dem beschriebenen Bewegungsvorgang, der Ringkolben durch Beaufschlagung des Zylinderraums 15 mit Druckluft nach unten gefahren wird und hierbei der Ringteil 18 des Ringkolbens mit der stirnseitigen Klemm- und Dichtfläche 19 vollumfänglich und dicht auf dem Folienrand aufliegt.

Wichtig ist ferner, daß der Druck in dem oberen Zylinderraum 15 größer ist als der Druck in dem unteren Innenraum 25 um zu gewährleisten, daß beim Einblasen von Formluft über den Lufteinlaß 23 nicht der Ringkolben 10 nach oben abgehoben wird.

Nach erfolgter Ausformung wird das Unterteil 8 nach unten weggefahren, und der Becher wird über nicht näher dargestellte Auswerfer entformt, bleibt aber nach wie vor an der Materialbahn 20 hängen, wie dies auf der rechten Seite in Figur 1 dargestellt ist.

In diesem Stadium wird nun der Ringteil des Ringkolbens 10 aufgrund der Druckfeder 12 weiter nach unten verfahren, um etwa 0,5 mm, wonach dann der nächste Vorschub der Materialbahn erfolgt, um beim Schließen des Unterteils 9 in Richtung auf das feststehende Oberteil 8 eine Vorspannung der Folie an der Klemm- und Dichtfläche 29 bereits schon zu gewährleisten.

Die Druckluft für den Zylinder 3 wird nach Figur 2 über eine Leitung 38 und über ein Ventil 37 bereitgestellt.

| ZEICHNUNGS-LEGENDE | | | |
|---|---|---|---|
| 1 | Formwerkzeug | 26 | Kühlkanal |
| 2 | Gestelle | 27 | geformter Becher |
| 3 | Zylinder | 28 | Gesenk |
| 4 | Kolbenstange | 29 | Kühlkanal |
| 5 | Kolbenstange | 30 | Ringkanal |
| 6 | Helferstempel | 31 | Dichtung |
| 7 | Gehäuse | 32 | Bodenteil |
| 8 | Oberteil | 33 | Schraube |
| 9 | Unterteil | 34 | Kanaleinlaß |
| 10 | Ringkolben | 35 | Luftkanal |
| 11 | Schaft | 36 | Drucklufttank |
| 12 | Druckfeder | 37 | Ventil |
| 13 | Dichtung | 38 | Leitung |
| 14 | " | 39 | " |
| 15 | Zylinderraum | 40 | " |
| 16 | Luftanschluß | 41 | Ventil |
| 17 | Luftkanal | 42 | Ventil |
| 18 | Ringteil | 43 | Untergesenk |
| 19 | Klemm- und Dichtfläche | 44 | Pfeilrichtung |
| 20 | Folienbahn | | |
| 21 | Pfeilrichtung | | |
| 22 | Ringraum | | |
| 23 | Luftzufuhr (Formluft) | | |
| 24 | Querbohrung | | |
| 25 | Innenraum | | |

**Patentansprüche**

1. Formwerkzeug zur Herstellung von Kunststoffbechern, wobei in der Ausgestaltung als Hohlblaswerkzeug aus einer vorgeheizten Kunststoffflachfolie mit einem Helferstempel Becher erzeugt werden und hierbei die Flachfolie zwischen dem Ober- und dem Unterwerkzeug eingeklemmt wird, **dadurch gekennzeichnet,** daß dem Helferstempel (6) ein Ringkolben (10) zugeordnet ist, welcher mit seiner unteren Klemm- und Dichtfläche (19) genau definiert die Folienbahn (20) im Umfangsbereich des Helferstempels (6) für das jeweilige Gesenk klemmt.

2. Formwerkzeug nach Anspruch 1, **dadurch gekennzeichnet,** daß der Ringkolben (10) durch Druckluft nach unten in seiner Klemm- und Dichtstellung gefahren und dort durch Druckluft festgehalten wird.

3. Formwerkzeug nach den Ansprüchen 1 und 2, **dadurch gekennzeichnet,** daß der Ringkolben (10) einen inneren Ringraum (22) ausbildet, in dem die Formluft eingeblasen wird.

4. Formwerkzeug nach Anspruch 1, **dadurch gekennzeichnet,** daß der Ringkolben (10) durch eine Druckfeder (12) federvorgespannt in seiner Klemm- und Dichtlage gehalten wird.

5. Formwerkzeug nach Anspruch 1, **dadurch gekennzeichnet,** daß eine zusätzliche Halterung des Ringkolbens (10) durch ein hochgespanntes Druckluftpolster im Zylinderraum (15) ausgebildet ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 339 238 (RAPP)<br>* das ganze Dokument *<br>--- | 1-5 | B29C51/26 |
| X | US-A-4 600 376 (GILLMANN ET AL.)<br>* das ganze Dokument *<br>--- | 1 | |
| A | US-A-3 570 064 (DE GROOT)<br>* das ganze Dokument *<br>--- | 1 | |
| A | WO-A-8 910 253 (MOBIK GMBH)<br>* Abbildung 6 *<br><br>----- | 2,5 | |
| | | | **RECHERCHIERTE SACHGEBIETE (Int. Cl.5 )**<br><br>B29C |

Der vorliegende Recherchenbericht wurde für alle Patentansprüche erstellt

| Recherchenort | Abschlußdatum der Recherche | Prüfer |
|---|---|---|
| DEN HAAG | 22 SEPTEMBER 1992 | SOZZI R. |

EPO FORM 1503 03.82 (P0403)